# FASCICULE DE BREVET EUROPEEN

(11) **EP 2 373 588 B1**
(45) Date de publication et mention de la délivrance du brevet: **20.02.2013**
(21) Numéro de dépôt: 09799122.8
(22) Date de dépôt: 02.12.2009
(51) Int. Cl.: C02F 1/56, B01D 21/01, C02F 9/00

(54) **PROCÉDÉ ET DISPOSITIF POUR LA RÉGÉNÉRATION DES SOLUTIONS DE LAVAGE POLLUÉES**
VERFAHREN UND VORRICHTUNG ZUR REGENERATION VON VERUNREINIGTEN WASCHLÖSUNGEN
METHOD AND DEVICE FOR THE REGENERATION OF POLLUTED SCRUBBING SOLUTIONS

(30) Priorité: 05.12.2008 US 328794
(43) Date de publication de la demande: 12.10.2011
(73) Titulaire: Elodys International, 49243 Avrille (FR)
(72) Inventeur: TASTAYRE, Gilles, Ontarion ON L7M 2MI (CA)
(74) Mandataire: Poupon, Michel
(86) Numéro de dépôt international: PCT/FR2009/001377
(87) Numéro de publication internationale: WO 2010/063906

(56) Documents cités:
- US-A- 5 510 037

## Description

L'invention s'applique à la régénération de solutions de lavage polluées, qu'elles soient alcalines, acides ou neutres

On sait purifier et clarifier l'eau en y ajoutant un ou plusieurs agents coagulants pour combiner les particules en suspension sous forme de floc qui est sédimenté par gravité. Dans cette méthode connue, l'eau est séparée en une phase précipitée et une phase liquide. Le floc séparé est enlevé du réacteur et déshydraté avant d'être jeté. L'eau recueillie est retournée dans les rivières

On sait aussi fort bien que les ions métalliques dissous dans l'eau peuvent en être enlevés par l'ajout de différents réactifs qui se combinent aux ions métalliques pour former des sels insolubles. Ceci est utile dans le traitement des eaux contaminées où, par exemple, l'ajout d'hydroxyde de calcium (chaux) dans l'eau dure provoque la précipitation des carbonates métalliques et la débarrasse des ions métalliques et des bicarbonates. Ce procédé de précipitation peut être amélioré par l'ajout dans l'eau de polyélectrolyte qui facilite la floculation des particules solides et d'un adjuvant de charge, par exemple du carbonate de calcium, qui augmente la densité des matières floculées améliorant ainsi la vitesse de sédimentation et de clarification de la liqueur.

On sait aussi enlever les matières en suspension dans l'eau par ajout de coagulants tels que le sulfate d'aluminium, le chlorure ferrique etc. qui sont couramment employés en conjonction avec la chaux et les procédés de sédimentation et/ou filtration. Les coagulants et fréquemment des adjuvants de coagulation aident à la formation de floc de taille convenable pour la sédimentation ; des systèmes de sédimentation permettent la séparation de flocs déposant lentement de l'eau purifiée.

La documentation sur les brevets s'applique aussi au problème de la purification des solutions.

Le brevet britannique n° 2,095,226 décrit une composition employée à la purification de l'eau et qui contient un hydroxyde alcalino-terreux et un polymère oligomère polyélectrolyte avec, à l'occasion un adjuvant de charge et un polyélectrolyte cationique

Le brevet britannique n° 2,157,278 décrit une méthode de traitement de l'eau utilisant une composition contenant du sulfate de calcium comme adjuvant de charge, un électrolyte cationique multivalent, par exemple du fer (III) ou de l'aluminium et un polyélectrolyte anionique ou cationique. Dans ce brevet le polyélectrolyte utilisé est cationique.

Le brevet canadien n°2,006,512 du 22 décembre 1989 par A Timmons décrit une méthode de purification de l'eau contaminée. Le traitement fait appel à l'ajout de coagulants cationiques à différentes étapes. Des adjuvants de précipitation sont ajoutés entre l'introduction des coagulants, pour précipiter les contaminants qui sont, typiquement, des ions métalliques en solution. Les coagulants sont des polyélectrolytes. Le procédé nous démontre que le premier coagulant ajouté provoque la formation d'un floc et que l'ajout du second coagulant provoque un précipité dense de contaminants. S'ensuit une séparation et les solides recueillis sont concentrés dans une cuve d'épaississement alors que le liquide séparé peut être filtré pour donner une eau claire qui peut être retournée dans une rivière.

Le brevet canadien n°2,012,201 déposé en mars 1990 par S.D. Kamato et al. Décrit une méthode de traitement de l'eau qui comprend l'ajout d'un premier réactif contenant l'oxyde ou hydroxyde d'un métal alcalin ou alcalino-terreux alcalinisant ainsi l'eau boueuse. Un second réactif contenant un coagulant polymérique anionique est ajouté à l'eau soit simultanément soit après l'introduction du premier réactif. Un troisième réactif contenant un sulfate est ensuite ajouté, rendant l'eau faiblement alcaline. Enfm un quatrième réactif contenant un coagulant polymérique anionique est ajouté à l'eau boueuse. Le résultat du traitement est la formation d'un floc abondant et stable. Quand l'eau est faiblement alcaline, un coagulant polymérique anionique est ajouté à l'eau boueuse pour combiner les particules fines, l'hydroxyde et les ions métalliques en un floc dense et solide.

Le brevet américain n° 5,540,037 déposé le 23 avril 1996 par Gilles Tastayre décrit un procédé de régénération des solutions nettoyantes polluées. Le procédé comporte les étapes séquentielles suivantes, d'abord le pré-conditionnement de la solution polluée. Ensuite un matériau absorbant est ajouté à la solution pré-conditionnée pour former une solution interactive. Des agents précipitants sont ensuite ajoutés à la solution interactive pour précipiter les matériaux indésirables de la solution. La précipitation des matériaux indésirables de la solution interactive est obtenue par ajout d'agents de floculation anioniques et cationiques dans celle-ci, suivant les étapes séquentielles suivantes (i) ajout d'un floculant polymérique anionique ou cationique à la solution interactive (ii) homogénéiser soigneusement la solution et (iii) ajout de l'autre agent floculant, anionique ou cationique, provoquant ainsi la précipitation des agents insolubles sous forme de floc. Enfin la solution contenant le floc précipité est soumise à une séparation solide/liquide.

Le nettoyage est une technologie complexe dont les résultats dépendent de quatre paramètres soit : le temps, la température, la concentration et l'agitation. Certaines solutions nettoyantes contiennent des détergents pour éliminer les solides et/ou des caustiques ou alcalins qui réagissent avec les polluants organiques. D'autres solutions nettoyantes peuvent contenir des acides pour enlever les polluants inorganiques et minéraux.

En dépit des connaissances qui précèdent, des améliorations sont nécessaires, et, en particulier il y a un besoin pour la régénération desdites solutions nettoyantes alcalines ou acides.

C'est donc un but de cette invention de fournir une méthode simple et facile à mettre en oeuvre pour la régénération des solutions nettoyantes polluées acides ou alcalines et de provoquer la floculation des sels solides de calcium et magnésium qui sont précipités quand les réactifs sont ajoutés à la solution.

C'est un autre but de cette invention de fournir une méthode de la régénération des solutions nettoyantes polluées acides ou alcalines par laquelle on forme des flocs gros et solides par addition de petites quantités de réactifs.

Un autre but de cette invention est de fournir une méthode de la régénération des solutions nettoyantes polluées acides ou alcalines dans laquelle les polluants dispersés, qui ont été enlevés des surfaces contaminées ne réagissent pas avec les solutions caustiques ou acides, ce qui aurait comme conséquence de réduire l'efficacité du nettoyage, et donc de maintenir la concentration de caustique ou d'acide à un meilleur niveau avec moins de remise à niveau de la concentration.

Un autre but de cette invention est de fournir une méthode de régénération des solutions nettoyantes polluées acides ou alcalines par laquelle la charge polluante est maintenue à un niveau minimum en sorte que les solutions nettoyantes sont plus actives et nettoient plus rapidement.

Un autre but de cette invention est de fournir une méthode de régénération des solutions nettoyantes polluées acides ou alcalines par laquelle les solutions polluées dont la viscosité élevée interfère avec la pénétration et l'enlèvement des polluants avec les propriétés nettoyantes sont traitées pour enlever les polluants en sorte que les solutions régénérées sont plus fluides et pénètrent plus efficacement.

L'invention est basée sur l'utilisation de bentonite de sodium modifiée par une quantité déterminée de carbonate de sodium pour la précipitation du calcium et du magnésium des solutions alcalines en conjonction avec l'utilisation d'un floculant polymérique anionique ou cationique à toute température ambiante.

L'invention fournit donc un procédé de régénération des solutions nettoyantes polluées acides ou alcalines comprenant les étapes suivantes :
- récupération de la solution alcaline ou acide polluée,
- ajout de bentonite de sodium et de carbonate de sodium à la solution polluée alcaline ou acide sous agitation pour former une solution interactive ;
- ajout d'un floculant polymérique anionique ou d'un floculant polymérique cationique provoquant la précipitation des sels insolubles de calcium ou magnésium sous forme de floc
- filtration de la solution contenant le floc pour obtenir un résidu solide de teneur >25% en matière sèche.

L'une des bentonites convenables est la bentonite de sodium dilatante, de préférence du type Wyoming ou Black Hills. Ces bentonites sont essentiellement constituées de particules de montmorillonite qui dilatent ou gonflent fortement au contact de l'eau.

Les bentonites de type Wyoming ou Black Hills sont des particules colloïdales normalement hydrophiles. C'est-à-dire que chaque particule est solvatée ou hydratée et devient ainsi très volumineuse, de texture peu consistante maintenue par de l'eau qui pénètre et dilate les couches réticulaires formant la particule de bentonite. L'eau fixée forme une masse qui encapsule chaque unité.

La bentonite de sodium possède les caractéristiques suivantes qui sont particulièrement adaptées à l'invention : mise en suspension dans de l'eau contenant peu d'électrolytes of substances ionisables, elle se dilate jusqu'à trente fois son volume et forme une pâte gélatineuse qui, après dilution dans l'eau peut, si nécessaire, être redispersée pour former un sol colloïdal. Dans ce sol, la phase dispersée comprend des particules de bentonite fortement hydratées et chargées négativement du type précédemment décrit. En l'absence de floculant approprié un tel sol ne montrera indéfiniment aucune forme de séparation de la phase dispersée en raison de la répulsion mutuelle de la couche extérieure, car une partie des cations sont fixés par l'eau entourant chaque particule de bentonite. En contrepartie si un électrolyte ou matériau ionisable fournissant des cations est ajouté en proportion adéquate au sol de bentonite, il y aura neutralisation des anions, lesquels sont transportés par la bentonite elle-même, avec réduction concomitante des charges répulsives ce qui permet la formation d'agglomérats de coalescence de tailles diverses. Pour la majorité des particules de bentonite, cette agglomération se poursuit jusqu'à la formation rapide de flocs visibles. La bentonite de sodium peut être utilisée en conjonction avec du carbonate de sodium pour précipiter l'excès d'ions calcium et magnésium.

Lors de l'étape de floculation ou précipitation, il est nécessaire d'utiliser des floculants polymériques.

Les floculants polymériques anioniques utilisés seuls ou en combinaison sont choisis parmi le groupe comprenant l'acide alginique, les alginates, l'alginate de sodium, le polyacrylate de sodium, les copolymères maléiques, les polyacrylamides partiellement hydrolysés, les polyacides anioniques et leurs sels, un sel métallique oligomère simple d'acide acyclique, le sel métallique alcalin d'un oligomère simple d'acide méthacrylique, un sel métallique alcalin d'un oligomère complexe d'acide acrylique, un sel métallique alcalin d'un oligomère complexe d'acide méthacrylique, une carboxyméthylcellulose de basse viscosité et un sulfonate oligomère. Dans les solutions neutres ou acides on peut utiliser le chitosan.

Le coagulant cationique peut être un polyamide ou un polyacrylate.

Lors de l'étape de précipitation, le coagulant (floculant) choisi (anionique ou cationique) est ajouté à la solution interactive qui est ensuite convenablement agitée.

L'étape finale est la filtration faite sur filtre à sable/charbon, membrane conventionnelle ou en acier inoxydable. Une technique de choix est l'emploi d'un filtre rotatif sous vide recouvert d'une couche filtrante adéquate. La filtration est faite entre 1 et 10 µ. Ceci n'exclut pas l'utilisation d'autres techniques de filtration dans la mesure ou le résidu solide à la bonne teneur en extrait sec. À cette concentration ledit résidu peut être jeté comme résidu solide ordinaire et aucune méthode spécifique n'est requise pour ce le rejet.

Le procédé peut ou non inclure l'ultrafiltration de la solution filtrée comme étape de finition pour améliorer la clarté de la solution traitée et garantir l'élimination pratiquement complète te tout micro-organisme, Cette ultrafiltration étant faite dans la fourchette de 5000 à 15000 Dalton avec des membranes adéquates.

La filtration peut aussi comprendre une oxydation faite avec de l'ozone, du peroxyde d'hydrogène ou autres oxydants chimiques appropriés, ceci pour compléter la destruction des impuretés de la solution.

La filtration peut aussi être faite sur des filtres beaucoup plus grossiers agissant comme dégrilleurs (connus comme «filtres à sable rapides»). On doit remarquer que ces filtres ont peu de capacité clarifiante intrinsèque et que l'essentiel de la clarification provient du traitement antérieur avec les réactifs appropriés comme précédemment décrit. C'est-à-dire que les matières en suspension ont été traitées de façon à s'agglomérer ou coalescer en larges agglomérats qui décantent facilement et sont ensuite enlevés (par filtration primaire) avant la filtration secondaire, Un tel procédé peut comprendre l'absorption par des floculants polymériques actifs, la décantation en bassin pour éliminer les agglomérats et enfin le filtre primaire qui enlève la plus grande partie des contaminants.

Pour éviter le colmatage des interstices et éventuellement le ralentissement ou l'arrêt complet du flux de liquide à travers le filtre, on peut ajouter de petites quantités d'adjuvants de filtration à la solution à filtrer.

On peut améliorer l'efficacité initiale de la filtration avec une pré-couche d'adjuvant de filtration déposée sur le filtre, en sus de l'ajout à la solution à filtrer. Les matériaux généralement utilisés pour cet usage sont la terre de diatomée, la perlite, matériaux siliceux, charbon et matières fibreuses comme la cellulose.

D'autre aides à la filtration peuvent inclure le pré-conditionnement de la solution à filtrer avec de petites quantités d'oxyde de magnésium ou les adjuvants pulvérulents décrits auparavant, de préférence en dispersant le matériau dans une cuve de pré-filtration disposant d'une agitation douce et d'un temps de rétention nominal et en filtrant ensuite par une technique de filtration conventionnelle.

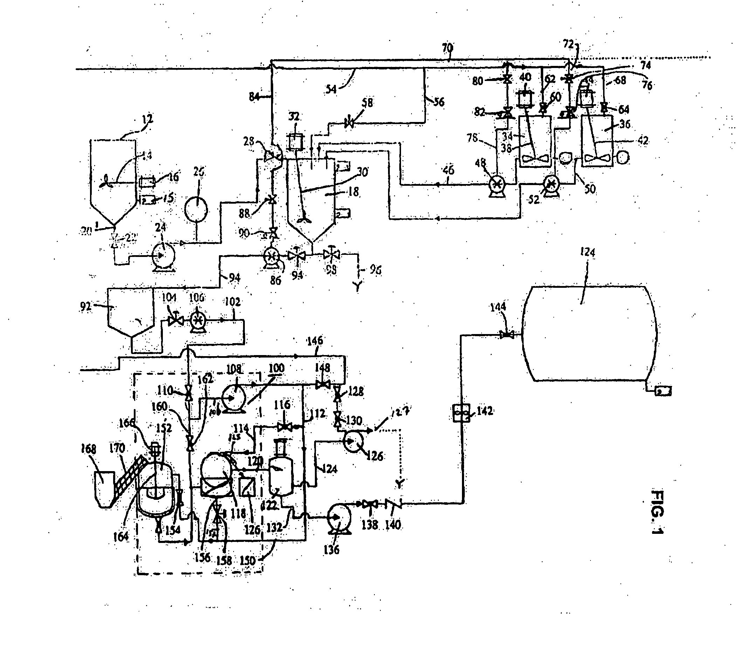

La figure 1 annexée est une représentation schématique d'un dispositif pour la mise en oeuvre du procédé de l'invention.

Comme l'indique le schéma, le système de régénération comporte un réservoir 12pour la solution polluée qui est équipé d'un agitateur 14 mu par un moteur 16. Le réservoir 12 et équipé d'un contrôle de niveau 15 qui détermine le volume de liquide dans le réservoir 12.Le réservoir 12 est relié à un réacteur 18 par une canalisation d'alimentation 20 située au fond du réservoir 12 et qui est elle-même munie d'une vanne de régulation de débit manuelle 22, la pompe 24 est contrôlée par la vanne de régulation de débit 26, une vanne d'alimentation d'air 28 reliée à la canalisation d'alimentation 20 se déversant en haut du réacteur 18. La vanne régulatrice de débit 26 asservit la pompe 24 pour l'arrêter lorsque le réservoir 12 est vide, donc la pompe 24 l'est aussi. Le réacteur 18 est muni d'un agitateur 30 mu par le moteur 32.

Le réacteur 18 est relié à un réservoir de réactif primaire 34 et à un réservoir de réactif secondaire 40 respectivement équipés d'un agitateur primaire 38 mu par un moteur primaire 40 et un agitateur secondaire 42 mu par un moteur secondaire 44.

La canalisation primaire 46 relie le fond du réservoir de réactif primaire 34 et le dessus du réacteur 18 pour alimenter ce dernier en dispersion de réactif primaire par la pompe 48.

La canalisation secondaire 50 relie le fond du réservoir de réactif secondaire 36 et le dessus du réacteur 18 pour alimenter ce dernier en dispersion de réactif secondaire par la pompe 52.

Le dessus du réacteur 18 est aussi relié à une alimentation en eau 56 par une dérivation de la canalisation 54 qui est équipée d'une électrovanne 58 sur la dérivation 56. L'alimentation primaire 54 est munie d'un mano-régulateur 60 près de la sortie d'une première alimentation en eau 62 et d'un second mano-régulateur 64 près de la sortie de la seconde alimentation en eau 68. Le premier mano-régulateur 60 contrôle la quantité d'eau reçue dans le réservoir de réactif primaire pour produire la dispersion du premier réactif. Le second mano-régulateur 64 contrôle la quantité d'eau reçue dans le réservoir de réactif secondaire pour produire la dispersion du ou solution du second réactif.

Une alimentation en air est aussi branchée comme suit : par une première ligne 72 à la pompe 52 et les vannes appropriées soit l'électrovanne 74 et le mano-régulateur 76, par une seconde ligne 74 à la pompe 48 et les vannes appropriées soit l'électrovanne 80 et le mano-régulateur 82 et par une troisième ligne à la pompe 86 et les vannes appropriées soit l'électrovanne 88 et le mano-régulateur 90.

Les mano-régulateurs 76, 82 et 90 commandent respectivement les électrovannes 74,80 et 88 qui commandent à leur tour les pompes 52,48 et 86.

Le réacteur est relié à une cuve-tampon 92 par la ligne de soutirage 94 qui part du fond du réacteur 18 et alimente la cuve-tampon par le dessus par la vanne 94 et la pompe 86. La cuve-tampon sert à l'alimentation continue du système de filtration (décrit plus loin) alors que le fonctionnement du réacteur est cyclique. Une ligne de vidange 96 située au fond dur réacteur 18 est contrôlée par la vanne 98.

La cuve-tampon 92 est reliée à un système de filtration adéquat, dans cet exemple un filtre tambour sous vide repéré sous le code 100. Le lien entre la cuve-tampon 92 et le système de filtration est établi par une première ligne 102 du fond la cuve-tampon 92 par la vanne pneumatique 104 et la pompe 106, puis par une seconde ligne 106 à la pompe 108 par la vanne manuelle 110 et enfin par une troisième ligne 114 par la vanne manuelle 116 à l'entrée du filtre tambour sous vide 118.

Le filtre tambour sous vide 118 comprend une première ligne d'entrée 120 reliée à l'entrée du casse-mousse 122 par la ligne sous vide 124, un racloir élimine les solides filtrés dans la benne 126. La ligne sous vide 124 du casse-mousse 122 est reliée à une pompe à vide 126 dont l'échappement se fait par la ligne 127. L'admission d'air dans la pompe à vide 126 se fait par les vannes manuelles 128 et 130. Le casse-mousse 122 comprend aussi une ligne de sortie principale 132 reliant le fond du casse-mousse 122 et l'entrée d'un gros réservoir 124 par la pompe 136 et les vannes nécessaires soit la vanne manuelle 138, le clapet anti-retour 140, le débitmètre 142 et la vanne manuelle 144.

La benne de matériau d'encollage 168 est reliée au dessus de la cuve de mélange 152 par un convoyeur à vis incliné. La cuve de mélange comprend une ligne d'alimentation en eau 150 reliée à une troisième ligne 112, la ligne d'entrée d'eau 150 conduit à la cuve de mélange par la vanne manuelle 154.

À l'usage, après que la solution nettoyante acide ou alcaline ait rempli ses fonctions, elle est polluée et doit être régénérée. Nous allons décrire le procédé de régénération suivant l'invention.

La solution acide ou alcaline polluée est agitée dans le réservoir ou elle est reçue, de là elle est pompée dans le réacteur. Le réservoir de réactif primaire contient une dispersion aqueuse de bentonite de sodium et de carbonate de sodium. Celle-ci est bien agitée et ajoutée dans le réacteur. Le réservoir de réactif secondaire contient une dispersion d'agent floculant soit anionique soit cationique comme décrit précédemment. Celle-ci est bien agitée et ajoutée dans le réacteur.

L'agitation vigoureuse des réactifs dans le réacteur améliore la précipitation des sels de calcium et/ou de magnésium.

La solution précipitée et bien agitée est pompée dans la cuve-tampon. Celle-ci n'est jamais vide pour permettre la filtration en continu alors que la solution acide ou alcaline polluée est mélangée cycliquement à la bentonite, au carbonate de sodium et au floculant. La solution précipitée est ensuite pompée vers un filtre à tambour sous vide. Le filtre à tambour sous vide a préalablement été garni d'une couche de matériau filtrant. Les solides sont raclés de la surface par une lame et déchargés dans une benne. The liquide soutiré est débarrassé de sa mousse dans un casse-mousse et pompé dans un réservoir ou il sera remis à la bonne concentration par l'usager.

La solution régénérée peut subir une étape supplémentaire de remise à niveau de la concentration par ajout de concentré. Ceci pour obtenir une solution nettoyante réutilisable.

Les avantages importants de l'invention sont :
- régénération et recyclage des solutions nettoyantes polluées acides et alcalines ;
- maintien des solutions alcalines au meilleur de leur efficacité ;
- réduction marquée de la pollution organique, chimique et DBO/DCO ;
- économies de produits chimiques ;
- économies d'eau ;
- économies d'énergie ;
- réduction des temps de lavage pour accroître la productivité ;
- réduction ou élimination des besoins en traitement des eaux usées.

De la description qui précède, quiconque est versé dans la matière peut facilement évaluer les caractéristiques essentielles de l'invention, et, sans notablement dévier de l'esprit et du champ qui y sont attachés, peut faire divers changements et modifications pour l'adapter à divers usages et conditions, En conséquence de tels changements et modifications sont de façon appropriée et équitablement présumés être inclus dans la gamme complète des revendications incluses.

## Revendications

1. Procédé pour améliorer la précipitation des sels de calcium et/ou de magnésium dans la régénération des solutions nettoyantes acides ou alcalines polluées, ce procédé comprenant les étapes suivantes :
a. récupération de la solution alcaline ou acide polluée ;
b. ajout d'une dispersion aqueuse sous agitation de bentonite de sodium et de carbonate de sodium dans la solution nettoyante polluée brute acide ou alcaline pour obtenir une solution interactive ;
c. ajout d'un floculant polymérique soit anionique soir cationique à ladite solution interactive précipitant ainsi les sels insolubles de calcium et de magnésium sous forme de floc formant ainsi une solution réactive ;
d. application à ladite solution réactive un procédé de filtration pour obtenir un extrait sec >25% pour les solides précipités, la filtration s'effectuant en continu tandis que l'ajout de la dispersion aqueuse et du floculant polymérique s'effectue cycliquement.

2. Procédé selon la revendication 1, **caractérisé en ce que** ladite précipitation des sels insolubles de calcium et magnésium est cyclique alors que la filtration est continue.

3. Procédé selon la revendication 2, **caractérisé en ce que** la filtration continue est obtenue par emploi d'une zone tampon pour la solution acide ou alcaline traitée cycliquement.

4. Procédé selon la revendication 1, **caractérisé en ce que** la bentonite de sodium est du type Wyoming ou Black Hills dilatante.

5. Procédé selon la revendication 1, **caractérisé en ce que** ledit floculant polymérique anionique est choisi parmi le groupe comprenant l'acide alginique, les alginates, l'alginate de sodium, le polyacrylate de sodium, les copolymères maléiques, les polyacrylamides partiellement hydrolysés, les polyacides anioniques et leurs sels, un sel métallique oligomère simple d'acide acyclique, le sel métallique alcalin d'un oligomère simple d'acide méthacrylique, un sel métallique alcalin d'un oligomère complexe d'acide acrylique, un sel métallique alcalin d'un oligomère complexe d'acide méthacrylique, une carboxyméthylcellulose de basse viscosité et un sulfonate oligomère.

6. Procédé selon la revendication 1, **caractérisé en ce que** ledit floculant polymérique cationique est choisi dans le groupe consistant d'un polyamide et d'un polyacrylate.

7. Procédé selon la revendication 1, **caractérisé en ce que**, lors de la phase de précipitation, le coagulant choisi est ajouté à la solution interactive et par lequel ladite solution est vigoureusement agitée.

8. Procédé selon la revendication 1, **caractérisé en ce que** ladite filtration est faite sur un filtre à charbon, à sable, à membrane, à membrane d'acier inoxydable ou un tambour sous vide garni d'un matériau filtrant approprié.

9. Procédé selon la revendication 8, **caractérisé en ce que** la filtration est de l'ordre de 1 à 10 µ.

10. Procédé selon la revendication 8, **caractérisé en ce que** l'adjuvant de filtration est choisi dans un groupe comprenant : silice de diatomée, perlite, autre matériaux siliceux, carbone et fibre de cellulose.

11. Procédé selon la revendication 1 comprenant une phase supplémentaire d'ultra filtration de la solution pré-filtrée avec des membranes adéquates ayant un point de coupure compris entre 5000 et 15000 Dalton.

12. Procédé selon la revendication 1, **caractérisé en ce que** ladite filtration comprend une phase d'oxydation.

13. Procédé selon la revendication 12, **caractérisé en ce que** ladite oxydation est obtenue avec de l'ozone, les peroxydes d'hydrogènes ou autre oxydant chimique adéquat.

14. Procédé selon la revendication 1, **caractérisé en ce que** :
- l'étape (b) est conduite en utilisant une bentonite de sodium dilatante du type Wyoming ou Black Hills et du carbonate de sodium
- l'étape (c) par lequel ledit floculant polymérique anionique est choisi parmi le groupe comprenant l'acide alginique, les alginates, l'alginate de sodium, le polyacrylate de sodium, les copolymères maléiques, les polyacrylamides partiellement hydrolysés, les polyacides anioniques et leurs sels, un sel métallique oligomère simple d'acide acyclique, le sel métallique alcalin d'un oligomère simple d'acide méthacrylique, un sel métallique alcalin d'un oligomère complexe d'acide acrylique, un sel métallique alcalin d'un oligomère complexe d'acide méthacrylique, une carboxyméthylcellulose de basse viscosité et un sulfonate oligomère et par lequel le coagulant choisi est ajouté à la solution interactive qui est ensuite vigoureusement agitée.
- l'étape de filtration (d) est conduite avec un filtre à charbon, à sable, à membrane, à membrane d'acier inoxydable ou un filtre tambour sous vide garni d'un adjuvant de filtration adéquat et que ladite filtration est de l'ordre de 1 à 10µ, incluant aussi une phase supplémentaire d'ultrafiltration de la solution pré-filtrée sur des membranes adéquates pour un point de coupure de 5000 à 15000 Dalton et
- et que ladite filtration comprend une phase d'oxydation.

15. Procédé selon la revendication 1, **caractérisé en ce que** :
- l'étape (b) est conduite en utilisant une bentonite de sodium dilatante du type Wyoming ou Black Hills et du carbonate de sodium
- l'étape (c) par lequel ledit floculant polymérique cationique est choisi parmi le groupe comprenant un polyamide ou un polyacrylate et par lequel le coagulant choisi est ajouté à la solution interactive qui est ensuite vigoureusement agitée.
- l'étape de filtration (d) est conduite avec un filtre à charbon, à sable, à membrane, à membrane d'acier inoxydable ou un filtre tambour sous vide garni d'un adjuvant de filtration adéquat et que ladite filtration est de l'ordre de 1 à 10µ, incluant aussi une phase supplémentaire d'ultrafiltration de la solution pré-filtrée sur des membranes adéquates pour un point de coupure de 5000 à 15000 Dalton et
- et que ladite filtration comprend une phase d'oxydation.

16. Dispositif de régénération des solutions nettoyantes polluées, comprenant :
a. un réservoir (12) pour la solution nettoyante polluée
b. un réacteur (18)
c. un conduit (20) allant dudit réservoir de solution nettoyante polluée audit réacteur
d. un réservoir de réactif primaire (34)
e. un conduit (46) allant dudit réservoir de réactif primaire audit réacteur
f. un réservoir de réactif secondaire (40)
g. un conduit (50) allant dudit réservoir de réactif secondaire audit réacteur
h. un système de filtration (100)
i. un conduit (102) allant de ladite cuve tampon à l'entrée dudit système de filtration
j. un réservoir pour la solution nettoyante régénérée
k. un conduit allant dudit système de filtration audit réservoir de solution nettoyante régénérée
**caractérisé en ce qu'**il comprend
l. une cuve tampon (92)
m. un conduit (94) allant du réacteur à ladite cuve tampon
n. un conduit (102) allant de ladite cuve tampon à l'entrée dudit système de filtration.

17. Dispositif de régénération de solutions nettoyantes polluées selon la revendication 16 **caractérisé en ce que** :
a. ledit réservoir de solution nettoyante polluée est muni d'un agitateur (14)
b. ledit réacteur est muni d'une première adduction d'eau (62)
c. ledit réacteur est muni d'un agitateur mécanique
d. ledit réacteur est muni d'une seconde entrée (68)
e. ledit réacteur est muni d'un agitateur mécanique
f. ledit réacteur est muni d'une troisième adduction d'eau
g. ledit réacteur comprenant :
i. un filtre tambour sous vide
ii.une entrée dudit conduit audit filtre tambour sous vide
iii. une décharge dudit filtre tambour sous vide à une benne à résidus
iv. une première sortie dudit filtre tambour sous vide à un casse-mousse
v. une connexion entre ledit casse-mousse et une pompe à vide et
vi. une sortie dudit casse-mouse audit conduit allant audit réservoir de solution nettoyante régénérée.
h. un système d'encollage comprenant
i. une cuve d'encollage
ii. une benne pour l'entreposage du matériau filtrant
iii. un agitateur mécanique dans ladite cuve d'encollage
iv. un convoyeur de la benne d'entreposage du matériau filtrant à la cuve d'encollage.

## Claims

1. Method for improving the precipitation of calcium and/or magnesium salts during the regeneration of polluted alkaline or acidic cleaning solutions, said method comprising the following steps:
(a) recovering the polluted alkaline or acidic solution;
(b) adding an aqueous dispersion under agitation of sodium bentonite and sodium carbonate into the raw, polluted alkaline or acidic cleaning solution to obtain an interactive solution;
(c) adding either an anionic polymeric flocculating agent or a cationic polymeric flocculating agent to said interactive solution, thereby precipitating insoluble calcium and magnesium salts as flocs thus forming a reactive solution;
(d) subjecting said reactive solution to a filtration process to obtain a dry extract >25% for the precipitated solids, the filtration being performed continuously whilst the addition of the aqueous dispersion and the polymeric flocculating agent is performed cyclically.

2. Method according to claim 1, **characterised in that** said precipitation of insoluble calcium and magnesium salts is carried out cyclically, whereas the filtration is carried out continuously.

3. Method according to claim 2, **characterised in that** the continuous filtration is achieved using a buffer zone for the cyclically treated acidic or alkaline solution.

4. Method according to claim 1, **characterised in that** the sodium bentonite is the Wyoming or Black Hills type of swelling bentonite.

5. Method according to claim 1, **characterised in that** said anionic polymeric flocculating agent is selected from a group comprising alginic acid, alginates, sodium alginate, sodium polyacrylate, maleic copolymers, partial hydrolyzates of polyacrylamide, anionic polyacids and salts thereof, a simple oligomer metal salt of acyclic acid, the alkali metal salt of a simple oligomer of methacrylic acid, an alkaline metal salt of a complex oligomer of acrylic acid, an alkali metal salt of a complex oligomer of methacrylic acid, a low-viscosity carboxy methyl cellulose and an oligomeric sulfonate.

6. Method according to claim 1, **characterised in that** said polymeric cationic flocculating agent is selected from a group consisting of a polyamide and a polyacrylate.

7. Method according to claim 1, **characterised in that** during the precipitation phase, the selected coagulant is added to the interactive solution with which said solution is thoroughly mixed.

8. Method according to claim 1, **characterised in that** said filtration is carried out using a carbon filter, sand filter, membrane filter, a stainless steel membrane filter or rotary vacuum filter of an appropriate filtering material.

9. Method according to claim 8, **characterised in that** the filtration is in the order of 1 to 10 µ.

10. Method according to claim 8, **characterised in that** the filtration adjuvant is selected from a group comprising diatomaceous silica, perlite, other siliceous material, carbon and cellulose fibre.

11. Method according to claim 1 comprising an additional phase of ultrafiltration of the pre-filtered solution with adequate membranes with a cut-off point of between 5000 and 15000 Dalton.

12. Method according to claim 1, **characterised in that** said filtration comprises an oxidation step.

13. Method according to claim 12, **characterised in that** said oxidation is achieved with the use of ozone, hydrogen peroxides or another appropriate chemical oxidizer.

14. Method according to claim 1, **characterised in that**:
- step (b) is carried out using a Wyoming or Black Hills type of swelling sodium bentonite and sodium carbonate;
- step (c) by means of which said anionic polymeric flocculating agent is selected from a group comprising alginic acid, alginates, sodium alginate, sodium polyacrylate, maleate copolymers, partial hydrolyzates of polyacrylamide, anionic polyacids and salts thereof, a simple oligomer metal salt of acyclic acid, the alkali metal salt of a simple oligomer of methacrylic acid, an alkali metal salt of a complex oligomer of acrylic acid, an alkali metal salt of a complex oligomer of methacrylic acid, a carboxy methyl cellulose of low viscosity and an oligomeric sulfonate and by which the coagulant selected is added to the interactive solution which is then agitated vigorously,
- the filtration stage (d) is carried out using a carbon filter, sand filter, membrane filter, a stainless steel membrane filter or rotary vacuum filter with an appropriate adjuvant and said filtration is in the order of 1 to 10 µ, also including the additional stage of ultrafiltration of the prefiltered solution on adequate membranes for a cut-off point of 5000 to 15000 Dalton and
- said filtration comprises an oxidation phase.

15. Method according to claim 1, **characterised in that**:
- step (b) is carried out using the Wyoming or Black Hills type of swelling sodium bentonite and sodium carbonate;
- step (c) wherein the said cationic polymeric flocculating agent is selected from a group comprising a polyamide or a polyacrylate, and wherein the selected coagulant is added to the interactive solution, which is then agitated vigorously,
- the filtration stage (d) is carried out using a carbon filter, sand filter, membrane filter, stainless steel membrane filter or rotary vacuum filter with an appropriate filtration adjuvant, wherein said filtration is in the order of 1 to 10 p, including the additional phase of ultrafiltration of the pre-filtered solution on adequate membranes for a cut-off point of 5000 to 15000 Dalton and
- said filtration comprises an oxidation phase.

16. Device for the regeneration of polluted cleaning solutions comprising:
a. a reservoir (12) for the polluted cleaning solution
b. a reactor (18)
c. a conduit (20) coming from said reservoir of polluted cleaning solution to said reactor
d. a primary reactive reservoir (34);
e. a conduit (46) coming from said primary reactive reservoir to said reactor;
f. a secondary reactive reservoir (40)
g. a conduit (50) coming from said secondary reactive reservoir to said reactor,
h. a filtration system (100),
i. a conduit (102) coming from said buffer tank to the entry of said filtration system,
j. a reservoir for the regenerated cleaning solution,
k. a conduit coming from the said filtration system to the reservoir of regenerated cleaning solution,
**characterised in that** it comprises
l. a buffer tank (92),
m. a conduit (94) coming from the reactor to the said buffer tank,
n. a conduit (102) coming from said buffer tank to the entry of the said filtration system.

17. Device for the regeneration of polluted cleaning solutions according to claim 16 **characterised in that**
a. said reservoir of polluted cleaning solution is provided with an agitator (14),
b. said reactor is provided with a first water inlet conduit (62),
c. said reactor is provided with a mechanical agitator,
d. said reactor is provided with a second inlet conduit (68),
e. said reactor is provided with a mechanical agitator,
f. said reactor is provided with a third water inlet conduit,
g. said reactor comprising
i. a rotary vacuum filter,
ii. an inlet from said filter conduit to said rotary vacuum filter,
iii. a waste outlet from said rotary vacuum filter to a sludge bin,
iv. a primary outlet of said vacuum filter to a defoamer,
v. a connection between said defoamer and a vacuum pump and
vi. an outlet of said defoamer to said conduit coming to said reservoir of regenerated cleaning solution
h. a sizing system comprising
i. a sizing tank,
ii. a bucket for storing filtering material,
iii. a mechanical agitator in said sizing tank,
iv. a conveyor for the storing bucket of filtering material to the sizing tank.

## Patentansprüche

1. Verfahren zur Verbesserung der Fällung von Salzen des Calciums und/oder Magnesiums bei der Regenerierung von verunreinigten sauren oder alkalischen Reinigungslösungen, wobei das Verfahren die folgenden Schritte umfaßt:
a. Rückgewinnung der verunreinigten alkalischen oder sauren Lösung;
b. Hinzufügen einer wäßrigen Dispersion von Natrium-Bentonit und Natriumcarbonat in die verunreinigte saure oder alkalische Reinigungs-Rohlösung unter Rühren, um eine interaktive Lösung zu erhalten;
c. Hinzufügen eines entweder anionischen oder kationischen polymeren Flockungsmittels zu der genannten interaktiven Lösung, um so die unlöslichen Salze von Calcium und Magnesium als Flocken auszufällen, und um so eine reaktive Lösung zu bilden;
d. Anwendung eines Filtrationsverfahrens auf die genannte reaktive Lösung, um einen trockenen Extrakt ausgefällter Festkörper von >25% zu erhalten, wobei die Filtration kontinuierlich durchgeführt wird, während die Zugabe der wäßrigen Dispersion und des polymeren Flockungsmittels zyklisch durchgeführt wird.

2. Verfahren nach Anspruch 1, **dadurch gekennzeichnet, daß** die genannte Fällung der unlöslichen Salze des Calciums und/oder Magnesiums zyklisch ist, während die Filtration kontinuierlich durchgeführt wird.

3. Verfahren nach Anspruch 2, **dadurch gekennzeichnet, daß** die genannte kontinuierliche Filtration durch Verwendung einer Pufferzone für die zyklisch behandelte saure oder alkalische Lösung erreicht wird.

4. Verfahren nach Anspruch 1, **dadurch gekennzeichnet, daß** der Natrium-Bentonit vom dilatanten Wyoming- oder Black Hills-Typ ist.

5. Verfahren nach Anspruch 1, **dadurch gekennzeichnet, daß** das genannte anionische polymere Flockungsmittel ausgewählt ist aus der Gruppe umfassend Alginsäure, Alginate, Natriumalginat, Natriumpolyacrylat, Copolymere von Maleinsäure, teilweise hydrolysierte Polyacrylamide, anionische Polysäuren und ihre Salze, ein einfaches oligomeres Metallsalz einer azyklischen Säure, ein einfaches oligomeres, alkalisches Metallsalz von Methacrylsäure, ein alkalisches Metallsalz eines oligomeren Komplexes von Acrylsäure, ein alkalisches Metallsalz eines oligomeren Komplexes von Methacrylsäure, Carboxymethylcellulose geringer Viskosität und ein oligomeres Sulfonat.

6. Verfahren nach Anspruch 1, **dadurch gekennzeichnet, daß** das genannte kationische polymere Flockungsmittel ausgewählt ist aus der Gruppe bestehend aus einem Polyamid und einem Polyacrylat.

7. Verfahren nach Anspruch 1, **dadurch gekennzeichnet, daß** während der Phase des Ausfällens das ausgewählte Koagulans der Lösung interaktiv zugegeben und die genannte Lösung mit dem Koagulans heftig bewegt wird.

8. Verfahren nach Anspruch 1, **dadurch gekennzeichnet, daß** die genannte Filtration über einem Aktivkohlefilter, Sand, eine Membran, eine Membran aus rostfreiem Stahl oder eine vakuumdichte Trommel, die mit einem geeigneten Filtermaterial bespannt ist, durchgeführt wird.

9. Verfahren nach Anspruch 8, **dadurch gekennzeichnet, daß** der Filtrationsbereich in der Größenordnung von 1 bis 10µ liegt.

10. Verfahren nach Anspruch 8, **dadurch gekennzeichnet, daß** das Adjuvans der Filtration ausgewählt ist aus einer Gruppe umfassend: Kieselgur, Perlit, andere kieselsäurehaltigen Materialien, Kohlenstoff und Cellulosefasern.

11. Verfahren nach Anspruch 1, das einen zusätzlichen Ultrafiltrationsschritt der vorgefilterten Lösung mit geeigneten Membranen umfaßt, die einen Trennpunkt (-bereich) zwischen 5000 und 15000 Dalton aufweisen.

12. Verfahren nach Anspruch 1, **dadurch gekennzeichnet, daß** die genannte Filtration einen Oxidationsschritt umfaßt.

13. Verfahren nach Anspruch 12, **dadurch gekennzeichnet, daß** die genannte Oxidation durch Ozon, Wasserstoffperoxide oder andere geeignete chemische Oxidationsmittel erreicht wird.

14. Verfahren nach Anspruch 1, **dadurch gekennzeichnet, daß**:
- der Schritt (b) unter Verwendung eines dilatanten Natrium-Bentonit vom Wyoming- oder Black Hills-Typ und Natriumkarbonat durchgeführt wird
- bei dem Schritt (c) das genannte anionische polymere Flockungsmittel ausgewählt ist aus der Gruppe umfassend Alginsäure, Alginate, Natriumalginat, Natriumpolyacrylat, Copolymere von Maleinsäure, teilweise hydrolysierte Polyacrylamide, anionische Polysäuren und ihre Salze, ein einfaches oligomeres Metallsalz einer azyklischen Säure, ein einfaches oligomeres, alkalisches Metallsalz von Methacrylsäure, ein alkalisches Metallsalz eines oligomeren Komplexes von Acrylsäure, ein alkalisches Metallsalz eines oligomeren Komplexes von Methacrylsäure, Carboxymethylcellulose geringer Viskosität und ein oligomeres Sulfonat, und bei dem das ausgewählte Koagulans der interaktiven Lösung zugegeben wird, die anschließend stark bewegt wird.
- der Filtrationsschritt (d) mit einem Aktivkohlefilter, Sand, einer Membran, einer Membran aus rostfreiem Stahl oder einer vakuumdichten Trommel, die mit einem geeigneten Filtermaterial bespannt ist, durchgeführt wird, und daß der genannte Filtrationsbereich in der Größenordnung von 1 bis 10µ liegt, einschließlich eines zusätzlichen Ultrafiltrationsschritts der vorgefilterten Lösung mit geeigneten Membranen, um einen Trennpunkt (-bereich) zwischen 5000 und 15000 Dalton zu erhalten,
- und daß die genannte Filtration einen Oxidationsschritt umfaßt.

15. Verfahren nach Anspruch 1, **dadurch gekennzeichnet, daß**:
- der Schritt (b) unter Verwendung eines dilatanten Natrium-Bentonits vom Wyoming- oder Black Hills-Typ und Natriumkarbonat durchgeführt wird
- bei dem Schritt (c) das genannte kationische polymere Flockungsmittel ausgewählt ist aus der Gruppe umfassend ein Polyamid oder ein Polyacrylat, und bei dem das ausgewählte Koagulans der interaktiven Lösung während der Phase des Ausfällens zugegeben wird, die anschließend stark bewegt wird.
- der Filtrationsschritt (d) mit einem Aktivkohlefilter, Sand, einer Membran, einer Membran aus rostfreiem Stahl oder einer vakuumdichten Trommel, die mit einem geeigneten Filtermaterial bespannt ist, durchgeführt wird, und daß der genannte Filtrationsbereich in der Größenordnung von 1 bis 10µ liegt, einschließlich eines zusätzlichen Ultrafiltrationsschritts der vorgefilterten Lösung mit geeigneten Membranen, um einen Trennpunkt (-bereich) zwischen 5000 und 15000 Dalton zu erhalten,
- und daß die genannte Filtration einen Oxidationsschritt umfaßt.

16. Vorrichtung zur Regenerierung von verunreinigten Reinigungslösungen, umfassend:
a. einen Behälter (12) für die verunreinigte Reinigungslösung
b. einen Reaktor (18)
c. eine Leitung (20), die von dem genannten Behälter für die verunreinigte Reinigungslösung zu dem genannten Reaktor führt
d. einen Behälter für ein Primärreagenz (34)
e. eine Leitung (46), die von dem genannten Behälter für das Primärreagenz dem genannten Reaktor führt
f. einen Behälter für ein Sekundärreagenz (40)
g. eine Leitung (50), die von dem genannten Behälter für das Sekundärreagenz dem genannten Reaktor führt
h. ein Filtersystem (100)
i. eine Leitung (102), die von dem genannten Pufferbehälter zu dem Einlaß des genannten Filtersystems führt
j. einen Behälter für die regenerierte Reinigungslösung
k. eine Leitung, die von dem genannten Filtersystem zu dem genannten Behälter für die regenerierte Reinigungslösung führt
**dadurch gekennzeichnet, daß** sie umfaßt
l. einen Pufferbehälter (92)
m. eine Leitung (94), die von dem Reaktor zu dem genannten Pufferbehälter führt
n. eine Leitung (102), die von dem genannten Pufferbehälter zu dem Einlaß des genannten Filtersystems führt

17. Vorrichtung zur Regenerierung von verunreinigten Reinigungslösungen nach Anspruch 16, **dadurch gekennzeichnet, daß**:
a. der genannte Behälter für die verunreinigte Reinigungslösung mit einem Rührwerk (14) versehen ist
b. der genannte Reaktor mit einer ersten Wasserzuführung (62) versehen ist
c. der genannte Reaktor mit einer mechanischen Schüttelvorrichtung versehen ist
d. der genannte Reaktor mit einem zweiten Einlaß (68) versehen ist
e. der genannte Reaktor einer mechanischen Schüttelvorrichtung versehen ist
f. der genannte Reaktor mit einer dritten Wasserzuführung versehen ist
g. der genannte Reaktor umfaßt:
i. einen vakuumdichten Trommelfilter
ii. einen Einlaß von der genannten Leitung zu dem genannten vakuumdichten Trommelfilter
iii. einen Abladeplatz des genannten vakuumdichten Trommel filters in einem Abfallcontainer
iv. einen ersten Auslaß von dem genannten vakuumdichten Trommelfilter zu einem Schaum- und Schwimmdeckenzerstörer
v. eine Verbindung zwischen dem genannten Schaum- und Schwimmdeckenzerstörer und einer Vakuumpumpe und
vi. einen Auslaß von dem genannten Schaum- und Schwimmdeckenzerstörer zu der genannten Leitung, die zu dem genannten Behälter für die regenerierte Reinigungslösung führt.
h. ein Leimauftragsystem, umfassend:
i. ein Gefäß für den Leim
ii. einen Container zur Lagerung des filtrierten Materials
iii. eine mechanische Schüttelvorrichtung in dem genannten Gefäß für den Leim
vi. eine Förderanlage von dem Container für die Lagerung des filtrierten Materials zu dem Gefäß für den Leim.
